# EUROPEAN PATENT APPLICATION

(11) **EP 1 243 309 A1**
(43) Date of publication of application: **25.09.2002**
(21) Application number: 01201003.9
(22) Date of filing: 19.03.2001
(51) Int. Cl.: B01D 53/70

(54) **Process for the removal of organic micropollutants from fumes by means of a homogeneous adsorbing suspension of a hydrophobic and lipophilic solid in aqueous solution**

(71) Applicant: ENI S.p.A., 00144 Roma (IT); SNAMPROGETTI S.p.A., 20097 San Donato Milanese (Milano) (IT); ENITECNOLOGIE S.p.A., 20097 S. Donato Milanese (Milano) (IT)
(72) Inventor: Miglio, Roberta, 28047 Oleggio, Novara (IT); Bassetti, Angelo, 61032 Fano, Pesaro (IT); Maretto, Cristina, 35133 Padova (IT)
(74) Representative: De Gregori, Antonella

(57) **Abstract**

Process for the removal of organic micropollutants from contaminated fumes characterized in that it uses a slurry bubble column and essentially comprises the following steps:
- feeding of the contaminated fumes, optionally already having undergone air purge treatment in said column;
- washing of the contaminated fumes in said column by means of a homogeneous adsorbing suspension of a hydrophobic and lipophylic solid in aqueous solution in a quantity ranging from 0.01 to 10% by weight;
- discharging of the purified fumes from said column;
- flushing of an aliquot of the exhausted adsorbing suspension containing the organic micropollutants so as to maintain the removal of said micropollutants at over 90% in equivalent toxicity (TEQ) or to maintain a concentration of PCDD/F at the outlet at least below 0.1 ngTEQ/Nmc;
- reintegration of the homogeneous adsorbing suspension in said column.

## Description

The present invention relates to a process for the removal of organic micropollutants from fumes by the use of a homogeneous suspension of a hydrophobic/lipophylic solid in water.

From the numerous research activities and analyses of polychlorodibenzo-p-dioxins (PCDD) and polychlorodibenzofurans (PCDF) carried out in the last ten years, it has been possible to conclude that in principle all process categories in which chlorine is one of the components combined with a coal source and metallic oxides at temperatures exceeding 180°C, are potential sources of PCDD/F. The presence of PCDD/F has been detected in the gaseous emissions of incineration plants of solid urban waste or industrial waste, and also of metallurgical plants.

PCDD/F are the most widely known representatives of the group of persistent organic micropollutants, generally known as POP (persistent organic pollutants), a group to which other compounds also belong, such as for example, aromatic polycyclic hydrocarbons, polychlorobenzenes, polychloro bi- and tri-phenyls and chloronaphthenes, also generally detected in association with PCDD/F in the emissions of combustion processes.

An awareness of the effects of POP on the environment and the continuous evolution of legislations imposing increasingly stricter limits with respect to emissions, has led to a continuous improvement in the prevention and control technologies of this group of compounds.

The limiting/control of emissions of these compounds requires the use of adequate techniques to inhibit their formation or reformation combined with suitable techniques for removing these from the effluents produced.

Among organic micropollutants, PCDD/F are extremely toxic and for this reason they must be practically completely removed from exhausted combustion gases.

Treatment units essentially consist in removal systems by adsorption on solid materials, for example, by the introduction under dry or semi-dry conditions of activated carbons or mixtures based on lime and coal followed by filtration, or catalytic degradation systems.

The technique based on adsorption is limited by the temperature which must remain sufficiently high to avoid the condensation of acid gases and this reduces the adsorbing capacity of the material. Furthermore rather significant quantities of adsorbing solids are necessary, with the production of contaminated solid effluents, which require specific treatment. Together with the organic micropollutants in these systems, other groups of pollutants are also removed however, such as for example heavy volatile metals and acid gases. For catalytic systems on the other hand, complementary units must be installed, as the catalytic degradation of PCDD/F is more effective on combustion fumes from which most of the powders and acid gases have already been removed. Catalytic systems moreover, which generally operate at a temperature threshold of about 200-260°C, have high running costs, due to the post-heating of the gases.

The wet scrubber was originally introduced in the fume purification die to remove acid gases (for example HCl, HBr, HF, SOₓ, etc.). With respect to dry or semi-dry systems which can be used analogously, the wet scrubber (WS) undoubtedly has the advantage of guaranteeing limited quantities of effluents to be treated, and essentially water which can be easily recovered after physico-chemical treatment, and it also has the advantage of a much better performance in removing acid gases with respect to alternative dry systems. Particular scrubber configurations are also effective in the removal of suspended particulate.

The removal of organic micropollutants seems to be practically zero in traditional wet scrubbers designed for the removal of acid gases. Examples 1 and 2 of the present application indicate the analytical result of control tests on the performances of an industrial wet scrubber (plate scrubber) with respect to the removal of PCDD/F. The scrubber examined allows the reduction of acid gases and volatile metals at the levels of the best technology available for these groups of pollutants and can therefore be considered as being of high quality, but with respect to the removal of organic micropollutants they prove to be substantially ineffective.

Voest Alpine (Organohalogen Compounds Vol. 40(1999) page 441) has developed, under the name of Airfine, a spray scrubber which operates with water alone, without additives, which is particularly effective in the removal of PCDD/F associated with suspended particulate, as is generally the case of PCDD/F in gaseous effluents in the metallurgic industry. An essential element of the design of the scrubber relates to the nozzles which operate in the presence of a double stream of water and compressed air capable of producing an extremely effective dispersion of water drops in the fumes. There is no evidence that this spray scrubber is equally effective when the dioxins in fumes to be purified are mainly in the gas phase, as is generally observed in fumes from incineration plants, which have already undergone a first air purge treatment and enter a wet scrubber. Example 3 below of the present patent application describes a typical distribution of PCDD/F between particulate phase and vapor phase measured in combustion fumes at the inlet of a wet scrubber.

At present, various systems which propose the wet removal of dioxins, have already been developed and patented, but by the use of additives in the scrubbing liquid where the preferred additive is activated carbon.

Belco Technologies Corporation together with LAB S.A. has developed a wet scrubbing technology on an industrial scale with the use of activated carbons for the removal of dioxins. LAB S.A. also holds various patent applications on the process: WO 95/15207 and WO 92/19364. These applications claim the use of finely dispersed powders, for example activated carbons (but also oxides of Fe, Si, Al, Ti), for the wet purification of gases containing PCDD/F, which in turn contain catalytic centres for the oxidation, in the presence of suitable oxidizing agents, of the entrapped organic micropollutants. The EDV-De Diox technology however has a certain complexity, as it comprises a spray scrubber for the saturation of the gas, and also a Venturi-type section for the adiabatic expansion of the fumes to condense the vapor on the particulate possibly present. The aerosol produced is electrically charged by passage in a section in the presence of an electrode and subsequently separated by electrostatic attraction.

The company Avira has patented (WO 97/49478) a process for effecting the wet removal of dioxins. In this case, the activated carbon, but also coal, coke, lime or pounce, are preferably injected under dry conditions into the fumes to be purified, before putting them in contact with the stream of water, at a temperature of about 250°C in a steel scrubber internally lined with rubber. The process claimed is based in particular on the assumption that it is only possible to obtain low and controlled emissions of dioxins by taking into consideration the adsorption/desorption effect of the dioxins induced by the equipment used (equipment lining). In the device described, the removal of micropollutants is in relation to the equilibrium established between the concentration of dioxins in the stream at the inlet, the quantity of these already adsorbed in the rubber lining of the scrubber and the residual absorption capacity of the adsorbing solid introduced, with the evident formation of accumulation and memory phenomena of construction materials which, under unfavourable conditions, may cause an increase in the concentration of dioxins in the fumes leaving the device, instead of their removal.

The company Von Roll (Chemosphere, Vol. 25, Nr.1-2, pages 143-148, 1992) has published the results of various dioxin removal tests carried out in a wet scrubber of an urban solid waste industrial incinerator, by dosing activated carbon, under dry conditions, before the entrance of the fumes into the wet scrubber or dosing it directly into the liquid of a circuit (Venturi or Ring Jet stage) of the wet scrubber. The removal effectiveness of PCDD/F is about 50-70% better than that with water alone. The dry removal of PCDD/F by adsorption on regenerable plastics, is described in DE-44 25 658 by S. Kreisz, H. Hunsinger.

It has been surprisingly found that the content of PCDD and PCDF in gaseous streams can be significantly reduced, if fed into a suitably conceived device, by means of a homogeneous suspension of adsorbing solids of a hydrophobic and lipophylic nature in aqueous solution.

The process, object of the present invention, for the removal of organic micropollutants from contaminated fumes is characterized in that it uses a slurry bubble column and essentially comprises the following steps:
- feeding of the contaminated fumes, optionally already having undergone air purge treatment in said column;
- washing of the contaminated fumes in said column by means of a homogeneous adsorbing suspension of a hydrophobic and lipophylic solid in aqueous solution in a quantity ranging from 0.01 to 10% by weight, preferably from 0.1 to 5% by weight, even more preferably from 0.5 to 2.5% by weight;
- discharging of the purified fumes from said column;
- flushing of an aliquot of the exhausted adsorbing suspension containing the organic micropollutants so as to maintain the removal of said micropollutants at over 90% in equivalent toxicity (TEQ) or to maintain a concentration of PCDD/F at the outlet at least below 0.1 ngTEQ/Nmc;
- reintegration of the homogeneous adsorbing suspension in said column.

The hydrophobic and lipophylic solids used in the homogeneous adsorbing suspensions should have a particle size ranging from 5 to 500 µm, and preferably ranging from 10 to 250 µm.

Said hydrophobic and lipophylic solids are preferably selected from activated carbons, fly ashes, silicalites, zeolitic or zeolite-similar materials with a high content of silicon, synthetic or natural polymeric molecules, selected from plastic materials, resins, rubbers and/or silicons.

Among plastic materials, the following products are preferably used:
- polyolefins, more preferably selected from polyethylene (PE), polypropylene (PP), polybutenes and polymethylpentene;
- vinyl chloride polymers, in particular polyvinylchloride (PVC) ;
- aromatic polymers, more preferably selected from styrene polymers, in particular polystyrene, acrylonitrile-styrene copolymer (SAM), acrylonitrile-butadiene-styrene (ABS) polymers.

These solids can be used singly or mixed with each other.

The selection of the adsorbing solid may also be influenced by the necessity of contemporaneously removing other micropollutants, such as for example Hg. In this case, a specific adsorbent for Hg can also be suspended in the aqueous solution, consisting for example of functionalized activated carbons (for example impregnated with molecules containing Hg chelating organic groups) or plastics or resins with specific functional groups for Hg, selected for example from thiol, thiouronic, isothiouronic, pyrogallic acid, dithiocarbamate groups. Plastic materials are particularly preferred as they keep the particle size distribution unaltered in the application, (they do not form a fine fraction), and can therefore be easily and completely separated by filtration and do not complicate the physico-chemical treatment of the water in which the precipitation of the suspended solids must be controlled.

The process according to the present invention should preferably be carried out so that the temperature of the homogeneous aqueous suspension in the bubble column ranges from 30 to 70°C.

The slurry bubble column essentially consists of a vessel, preferably cylindrical, partially filled with the liquid containing a solid phase maintained in suspension by a stream of gas, preferably introduced from the bottom of the vessel by means of specific distributing devices.

The vessel also has an opening for the flushing of the saturated slurry, one for the outlet of the purified gases and auxiliary openings for the charging of the liquid or slurry or suitable reagents (chemicals). The apparatus is completed, depending on the particular application for which it is destined, and therefore also depending on the operating conditions to be adopted, by optional aerosol demisters, optional devices (liquid jet spray nozzles) capable of keeping the most critical surfaces clean, such as for example the gas distribution unit or demister, optional temperature control units, such as for example a liquid/liquid heat exchanger which can be placed inside the vessel, but also outside, after introducing a liquid recirculating circuit.

As is known to experts in the field, various functioning regimes can be distinguished in the slurry bubble column, depending on the properties of the gas, liquid or solid in question and operating conditions such as temperature, pressure, gas and possibly liquid rate, system capacity, concentration of the solid, distributor design.

At least two functioning regimes of the above column can be identified: homogeneous and heterogeneous. In the former, the gas phase flows through the suspension in the form of small finely dispersed bubbles. The latter can be represented by a generalized biphasic model, in which a socalled "dilute" phase is made up of a gas fraction which flows through the reactor in the form of large bubbles. The second, "dense" phase, is represented by the liquid phase in which solid particles are suspended, and the remaining gas fraction in the form of small finely dispersed bubbles. The large bubbles, having a greater rate of rise than the small ones, can be considered as being essentially in plug flow regime. The dense phase, consisting of the liquid, suspended solid and small finely dispersed bubbles, depending on the operating conditions and geometry of the reactor can be considered as being in plug flow or completely mixed flow regime.

In the current application, the flow-rates of the fumes (gas phase) to be treated are such as to maintain a high degree of turbulence in the system (heterogeneous-type flow regime) which favours a homogeneous dispersion of the absorbing solid and a frequent renewal of the gas/liquid interface.

The gas distributor in the vessel , which must ensure good dispersion of the gas phase in the slurry, can have different geometries, for example nozzle, bell, perforated tube distributors.

The apparatus may be optionally equipped with internal devices suitable for improving the turbulence and gasliquid contact (baffles, draft tubes).

The specific characteristics of said column relate to its simplicity, the capacity of obtaining a high gas/liquid specific interfacial surface, which favours the transporting of the dioxins from the fumes to the liquid in which the adsorbing solid is dispersed, not containing parts in movement or subject to blockage and wear owing to the presence of suspended solids, and at the same time not having dead areas in which the slurry in aqueous solution may separate, operating with a liquid under substantially batch conditions thus avoiding costly energy consumption required for moving the liquid, also comprising liquid flushing/reintegration to maintain stationary conditions of the system and having limited pressure drops.

The characteristic of not having to move the liquid proves to be the most advantageous aspect; this can be demonstrated by comparison with a scrubber having a more typical configuration for the fume purification of waste incineration plants, such as for example the Belco-Lab system cited in the art, which in a typical application for treating a fume volume of 30,000 mc/h must comprise continuous recirculation of about 260 mc/h of liquid.

This column also effects air purge and is therefore capable of removing the fraction of organic micropollutants associated with suspended particulate; this action can be particularly advantageous in the treatment of fumes from metallurgic plants in which the dioxins are essentially associated with suspended powders. Furthermore it is capable of causing condensation phenomena of the organic compounds present in vapour phase. The additives specified above help to accelerate the diffusion rate of the organic micropollutants from the fumes to the liquid phase and the introduction of an adsorbing solid allows a high storage capacity of said molecules.

The above equipment makes it possible to have high removal percentages of micropollutants with decisively low absolute residual values in the fumes leaving the reactor, in accordance with the Italian and European Community regulations in force. The operation preferably takes place at temperatures of the liquid in the column ranging from 30 to 70°C. The lower the temperature, the more effective the treatment will be.

The fumes are generally fed to the column at atmospheric pressure or slightly higher values, sufficient to compensate the pressure drops generated in the apparatus by the optional devices contained therein, and those localized in the distributor, which should be such as to guarantee good distribution of the gas and therefore ensure an effective turbulence in the overlying liquid column. The surface rates of the gas in the liquid column generally range from 0.1 to 1.5 m/sec, preferably 0.1-0.8 m/sec.

It has been surprisingly found that even at very low gas surface rates, for example 0.1 m/sec, with coal as slurry without the addition of dispersing agents, the turbulence of the liquid is such that there are no flotation/separation phenomena of the coal, which could be expected, either with water stabilized in an acid environment by the absorption of HCl or SOₓ or in a base environment by dosage with sodium carbonate.

Particularly advantageous is the condition of the suspension in which the pH is stabilized at over 6.5 by the dosage of sodium carbonate (non-acid environment) and the salinity of the liquid due to the sodium chloride or sodium sulfate/sulfite accumulated, of over 1%, as this condition tends to reduce the average diameter of the gas bubbles, favouring the formation of a specific gas/liquid interphase area and consequently further improving the performances of the system.

An aliquot of the exhausted adsorbing suspension containing the organic micropollutants is flushed continuously or batchwise and subjected, when necessary, to a filtration step for the separation of the hydrophobic and lipophylic solid in which said organic micropollutants have been adsorbed.

The filtered liquid can be recycled to the bubble column after reintegration of fresh hydrophobic and lipophylic solid and optionally aqueous solution.

The flushing can be limited to the concentration of other micro and macro pollutants present in the system. The exhausted adsorbing solids can be regenerated, burnt or optionally subjected to inertization or stabilization treatment; the selection of the treatment procedure depends on the contemporaneous presence of other groups of contaminants in addition the organic micropollutants.

When, for example, the adsorbing solid, in addition to organic compounds, accumulates heavy metals, it is preferably subjected to inertization, in other cases however it can be subjected to regeneration treatment of the thermal or chemical type, known in literature.

The process object of the present invention can be effected by means of various operating procedures, with respect to both the addition of fresh adsorbing solid and separation of the exhausted solid.

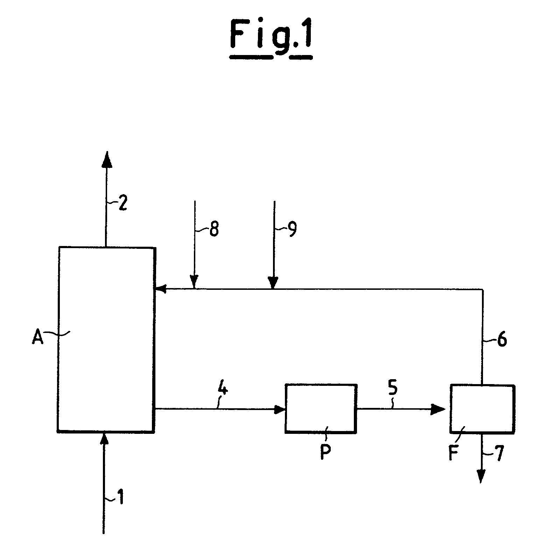

A better understanding of the process object of the present invention can also be obtained with the help of figure 1, which provides a schematic representation of the unitary operation which can be effected with this device.

The polluted fumes [1] are fed to the washing apparatus [A] and leave it decontaminated [2].

An aliquot of the suspension [4] is removed by means of a pump [P] and optionally sent to a filtration device [F] for the separation of the adsorbing solid [7] in which the micropollutants removed from the fumes are accumulated. The filtered liquid [6], depending on the composition of the fumes at the inlet of the washing unit [A], and therefore on the presence of other groups of contaminants, can be sent for physico-chemical treatment, or alternatively, fresh adsorbing solid can be added [8] and dosed either continuously or periodically, after reintegration [9] of the aqueous solution optionally used up in the operations described above.

Other advantages and characteristics of the present invention will appear evident from the following examples, which however do not limit the scope of the invention.

### EXAMPLE 1 - Comparative

Fumes with the composition indicated in detail in Table I are fed to a wet scrubber having a diameter of 3 meters, a height of 25 m, with a double acid and base circuit, at a flow-rate of 40,000 Nmc/h and washed in countercurrent with 60 mc/h of water in the acid circuit and 4 mc/h of water in the base circuit.

For more details on the PCDD/F, the analyses of all the toxic isomers at the inlet and outlet of the scrubber, are indicated in Table II under the columns IN and OUT. The sampling of the fumes is effected by means of glass sampling trains and with the filter/condenser method procedure described in regulation EN 1948-1. Table II also indicates, in addition to the concentration of each single toxic isomer of PCDD/F (ng/Nmc) the equivalent toxicity value per volume unit (ngTEQ/Nmc) which is calculated as the sum of the products of the concentrations of each single isomer for the corresponding equivalent toxicity value (TEF).

The removal of PCDD/F in terms of equivalent toxicity proves to be modest and equal to 14%.

In the same scrubber, the fumes at the outlet have a residual content of HCl < 2 ppm and of SO₂ < 10 ppm, demonstrating that a scrubber, even if extremely effective in reducing acid gases, is not capable of significantly removing PCDD/F.

### EXAMPLE 2 - Comparative

Fumes with the composition indicated in detail in Table III under column IN, are fed to a wet scrubber having a diameter of 3 meters, a height of 25 m, with a double acid and base circuit, at a flow-rate of 40,000 Nmc/h and washed in countercurrent with 60 mc/h of water in the acid circuit and 4 mc/h of water in the base circuit. The analysis of the fumes at the outlet is indicated in the same table under the column OUT.

It may seem surprising how the concentration of PCDD/F at the outlet (0.52 ngTEQ/Nmc) of the wet scrubber is higher than that at the inlet. This behaviour can be attributed to what is called the "memory effect" of the construction materials of the scrubber (in this specific case Derakane) which tend to adsorb/desorb the PCDD/F due to operating condition transients in the column, generally associated with the plant activation phases or to strong variations in the charge fed to the incinerating oven. This effect is both difficult to predict and also extremely negative and can also lead to failure to respect the limits for plant emission.

### EXAMPLE 3 Comparative

The fumes at the inlet of a wet scrubber situated in the fume purification die of a solid urban waste incineration plant, were subjected to sampling and analysis according to the filter/condenser method procedure described in regulation EN 1948. The results are specified in detail in Table IV.

Table IV indicates, under the column filter, the isomers and respective concentrations measured in the particulate present in the fumes and separated with the filter inserted in the sampling train, the column condenser indicates the isomers and respective concentrations of PCDD/F measured in the vapour phase which is condensed after the filter, which represents the fraction of PCDD/F present in the vapour phase.

The last line of the table specifies the distribution of dioxins (expressed in terms of equivalent toxicity) between particulate phase and vapour phase. The result shows that most (87%) of the PCDD/F in an air-purged stream at the inlet of a wet scrubber are present in vapour phase.

### EXAMPLE 4 - Comparative

Fumes, produced by SUW incineration and subjected to thermal recovery treatment and air purge, contaminated by PCDD/F according to the analysis indicated in Table V under the column IN and with a distribution of dioxins between particulate phase and vapour phase completely analogous to that specified in Example 3, were fed to the bubble column (without slurry) described in the invention, using a liquid ring pump situated downstream of the bubble column and sampling point of the fumes at the outlet of the column itself. The prototype of the bubble column used (cylindrical with a diameter of 20 cm) is completely made of glass/Teflon to avoid as much interference as possible of the construction materials on the analytical results (glass and Teflon are among materials with the least specific adsorption for PCDD/F). 22 Nmc/h of fumes are fed to the column at atmospheric pressure and at a temperature of 180°C, by means of a perforated plate and distributed in the overlying volume of water equal to 10 liters. The temperature of the liquid settles at about 50°C and the total height of the liquid (water + gas phase) is 50 cm. The analysis of the fumes at the outlet is indicated in Table V under the column OUT.

The removal obtained, in terms of equivalent toxicity variation, is negligible (less than 4%), the variability between the two analyses is lower than the measurement analytical error, and consequently the values obtained show that when operating with water alone, in the absence of an adsorbing solid, there is no removal of dioxins from the fumes in question.

### EXAMPLES 5-6

Fumes, produced by SUW incineration and subjected to thermal recovery treatment and air purge, contaminated by PCDD/F according to the analysis indicated in Table V under the column IN and with a distribution of PCDD/F, between particulate phase and vapour phase, completely analogous to that specified in Example 3, were fed to the slurry bubble column described in the invention.

The prototype of the bubble column used is the same as that described in Example 4.

22 Nmc/h of fumes are fed to the column at 180°C.

In the test indicated in Table VI as Example 5, 10 liters of water with 0.5% by weight of activated carbon, having a particle size centered at about 10 microns, were charged into the column and NaOH was continuously dosed to maintain the pH within a range of 6.5-7. The temperature of the liquid settled at about 49°C and the total height of the liquid (water + gas phase) remained at an average of 50 cm. A content of residual PCDD/F equal to 0.018 ngTEQ/Nmc was measured in the fumes at the outlet, and considering that a level of PCDD/F equal to 0.31 ngTEQ/Nmc was measured in the fumes at the inlet of the column, a removal of about 94% was obtained.

In a subsequent test (Example 6) the volume of liquid charged into the column was doubled, maintaining a concentration of the slurry of 0.5% by weight and the pH within the same range indicated above; in this case a concentration of PCDD/F of 0.01 ngTEQ/Nmc was measured at the outlet of the bubble column with respect to a concentration measured contemporaneously with a sampling of the fumes at the inlet of 0.266 ngTEQ/Nmc.

The result of the test carried out in the same column with water without slurry (Example 4) is provided for comparison.

The coal used is of a micro-mesoporous nature with a surface area of about 800 m²/g.

The scrubbing produces surprisingly low residual dioxin values, i.e. about an order of magnitude lower than the value imposed by present regulations which is 0.1 ngTE/Nmc.

### EXAMPLE 7

Fumes, produced by SUW incineration and subjected to thermal recovery treatment and air purge, contaminated by PCDD/F according to the analysis indicated in Table VII under the column IN, were fed to the bubble column described in the invention, using a liquid ring pump situated downstream of the column and of the sampling point of the fumes at the outlet of the column itself. The prototype of the bubble column used is cylindrical with an internal diameter of 20 cm. 16 Nmc/h of fumes are fed to the column at atmospheric pressure and at a temperature of 170°C, by means of a perforated plate and distributed in the overlying volume of water equal to 12 liters in which PVC, having a particle size of 130-150 microns, is suspended in a concentration of 2.5% by weight. The temperature of the suspension settles at about 50°C and the total height of the liquid (water + gas phase) is 60 cm. The analysis of the fumes at the outlet is indicated in Table VII under the column OUT.

The removal obtained, in terms of equivalent toxicity variation, is considerable. The concentration of dioxins measured in the fumes at the outlet of the bubble column with plastic in suspension is about an order of magnitude lower than the limit imposed by the regulation in force in Italy, equal to 0.1 ngTEQ/Nmc.

**Table I**

| | (v %) | (ng/Nmc) | (mg/Nmc) |
|---|---|---|---|
| H₂O | 10.7 | | |
| O₂ | 10.5 | | |
| N₂ | 71.1 | | |
| CO | | | 1 |
| CO₂ | 7.8 | | |
| PCDD/F - TEQ | | 0.19 | |
| Hg | | | 0.15 |
| powders | | | 1 |
| HCl | | | 500 |
| HF | | | 1 |
| SOₓ | | | 42 |

**Table II**

| Isomers | | | IN | OUT |
|---|---|---|---|---|
| | | TEF | | |
| 2,3,7,8 TCDD | ng/Nmc | 1 | 0.023 | 0.017 |
| 1,2,3,7,8 PeCDD | ng/Nmc | 0.5 | 0.048 | 0.081 |
| 1,2,3,4,7,8 HxCDD | ng/Nmc | 0.1 | 0.022 | 0.032 |
| 1,2,3,6,7,8 HxCDD | ng/Nmc | 0.1 | 0.031 | 0.064 |
| 1,2,3,7,8,9 HxCDD | ng/Nmc | 0.1 | 0.037 | 0.029 |
| 1,2,3,4,6,7,8 HpCDD | ng/Nmc | 0.01 | 0.175 | 0.229 |
| OCDD | ng/Nmc | 0.001 | 0.484 | 0.412 |
| 2,3,7,8 TCDF | ng/Nmc | 0.1 | 0.063 | 0.113 |
| 1,2,3,7,8 PeCDF | ng/Nmc | 0.05 | 0.204 | 0.105 |
| 2,3,4,7,8 PeCDF | ng/Nmc | 0.5 | 0.139 | 0.087 |
| 1,2,3,4,7,8 HxCDF | ng/Nmc | 0.1 | 0.180 | 0.078 |
| 1,2,3,6,7,8 HxCDF | ng/Nmc | 0.1 | 0.111 | 0.084 |
| 2,3,4,6,7,8 HxCDF | ng/Nmc | 0.1 | 0.083 | 0.064 |
| 1,2,3,7,8,9 HxCDF | ng/Nmc | 0.1 | 0.013 | 0.007 |
| 1,2,3,4,6,7,8 HpCDF | ng/Nmc | 0.01 | 0.233 | 0.172 |
| 1,2,3,4,7,8,9 HpCDF | ng/Nmc | 0.01 | 0.028 | 0.023 |
| OCDF | ng/Nmc | 0.001 | 0.072 | 0.060 |
| | | | | |
| PCDD/F | ngTE/Nmc | | 0.187 | 0.160 |
| where TEF = Equivalent Toxicity Factor | | | | |

**Table III**

| Isomers | | | IN | OUT |
|---|---|---|---|---|
| | | TEF | | |
| 2,3,7,8 TCDD | ng/Nmc | 1 | 0.018 | 0.016 |
| 1,2,3,7,8 PeCDD | ng/Nmc | 0.5 | 0.040 | 0.051 |
| 1,2,3,4,7,8 HxCDD | ng/Nmc | 0.1 | 0.032 | 0.068 |
| 1,2,3,6,7,8 HxCDD | ng/Nmc | 0.1 | 0.079 | 0.216 |
| 1,2,3,7,8,9 HxCDD | ng/Nmc | 0.1 | 0.090 | 0.202 |
| 1,2,3,4,6,7,8 HpCDD | ng/Nmc | 0.01 | 0.599 | 1.351 |
| OCDD | ng/Nmc | 0.001 | 1.777 | 2.168 |
| 2,3,7,8 TCDF | ng/Nmc | 0.1 | 0.083 | 0.085 |
| 1,2,3,7,8 PeCDF | ng/Nmc | 0.05 | 0.288 | 0.321 |
| 2,3,4,7,8 PeCDF | ng/Nmc | 0.5 | 0.322 | 0.444 |
| 1,2,3,4,7,8 HxCDF | ng/Nmc | 0.1 | 0.364 | 0.604 |
| 1,2,3,6,7,8 HxCDF | ng/Nmc | 0.1 | 0.222 | 0.385 |
| 2,3,4,6,7,8 HxCDF | ng/Nmc | 0.1 | 0.230 | 0.497 |
| 1,2,3,7,8,9 HxCDF | ng/Nmc | 0.1 | 0.016 | 0.030 |
| 1,2,3,4,6,7,8 HpCDF | ng/Nmc | 0.01 | 0.841 | 1.650 |
| 1,2,3,4,7,8,9 HpCDF | ng/Nmc | 0.01 | 0.088 | 0.193 |
| OCDF | ng/Nmc | 0.001 | 0.459 | 0.576 |
| | | | | |
| PCDD/F | ngTE/Nmc | | 0.34 | 0.52 |

**Table IV**

| Isomers | Conc. | TEF | Filter | Condenser | Tot. |
|---|---|---|---|---|---|
| 2,3,7,8 TCDD | ng/Nmc | 1 | 0.001 | 0.017 | |
| 1,2,3,7,8 PeCDD | ng/Nmc | 0.5 | 0.005 | 0.035 | |
| 1,2,3,4,7,8 HxCDD | ng/Nmc | 0.1 | 0.007 | 0.025 | |
| 1,2,3,6,7,8 HxCDD | ng/Nmc | 0.1 | 0.022 | 0.057 | |
| 1,2,3,7,8,9 HxCDD | ng/Nmc | 0.1 | 0.024 | 0.067 | |
| 1,2,3,4,6,7,8 HpCDD | ng/Nmc | 0.01 | 0.303 | 0.296 | |
| OCDD | ng/Nmc | 0.001 | 1.399 | 0.378 | |
| 2,3,7,8 TCDF | ng/Nmc | 0.1 | 0.005 | 0.078 | |
| 1,2,3,7,8 PeCDF | ng/Nmc | 0.05 | 0.023 | 0.265 | |
| 2,3,4,7,8 PeCDF | ng/Nmc | 0.5 | 0.028 | 0.294 | |
| 1,2,3,4,7,8 HxCDF | ng/Nmc | 0.1 | 0.048 | 0.316 | |
| 1,2,3,6,7,8 HxCDF | ng/Nmc | 0.1 | 0.033 | 0.189 | |
| 2,3,4,6,7,8 HxCDF | ng/Nmc | 0.1 | 0.047 | 0.183 | |
| 1,2,3,7,8,9 HxCDF | ng/Nmc | 0.1 | 0.004 | 0.012 | |
| 1,2,3,4,6,7,8 HpCDF | ng/Nmc | 0.01 | 0.227 | 0.614 | |
| 1,2,3,4,7,8,9 HpCDF | ng/Nmc | 0.01 | 0.034 | 0.054 | |
| OCDF | ng/Nmc | 0.001 | 0.289 | 0.170 | |
| | | | | | |
| PCDD/F | ngTE/Nmc | | 0.045 | 0.30 | 0.34 |
| % Distribution | | | 13% | 87% | |

**Table V**

| Isomers | | | IN | OUT |
|---|---|---|---|---|
| | | TEF | | |
| 2,3,7,8 TCDD | ng/Nmc | 1 | 0.016 | 0.015 |
| 1,2,3,7,8 PeCDD | ng/Nmc | 0.5 | 0.030 | 0.027 |
| 1,2,3,4,7,8 HxCDD | ng/Nmc | 0.1 | 0.005 | 0.005 |
| 1,2,3,6,7,8 HxCDD | ng/Nmc | 0.1 | 0.016 | 0.008 |
| 1,2,3,7,8,9 HxCDD | ng/Nmc | 0.1 | 0.009 | 0.005 |
| 1,2,3,4,6,7,8 HpCDD | ng/Nmc | 0.01 | 0.014 | 0.003 |
| OCDD | ng/Nmc | 0.001 | 0.001 | 0.0004 |
| 2,3,7,8 TCDF | ng/Nmc | 0.1 | 0.027 | 0.027 |
| 1,2,3,7,8 PeCDF | ng/Nmc | 0.05 | 0.008 | 0.010 |
| 2,3,4,7,8 PeCDF | ng/Nmc | 0.5 | 0.115 | 0.108 |
| 1,2,3,4,7,8 HxCDF | ng/Nmc | 0.1 | 0.023 | 0.042 |
| 1,2,3,6,7,8 HxCDF | ng/Nmc | 0.1 | 0.015 | 0.024 |
| 2,3,4,6,7,8 HxCDF | ng/Nmc | 0.1 | 0.017 | 0.018 |
| 1,2,3,7,8,9 HxCDF | ng/Nmc | 0.1 | 0.001 | 0.0037 |
| 1,2,3,4,6,7,8 HpCDF | ng/Nmc | 0.01 | 0.005 | 0.0038 |
| 1,2,3,4,7,8,9 HpCDF | ng/Nmc | 0.01 | 0.001 | 0.0008 |
| OCDF | ng/Nmc | 0.001 | 0.0003 | 0.0002 |
| | | | | |
| PCDD/F | ngTE/Nmc | | 0.310 | 0.306 |

**Table VI**

| | Liquid seal (cm) | Fumes | Liquid | Liq. T (°C) | Solid (conc.w% - part. size | PCDD/F %remov.- xConc. OUT (ngTEC/Nmc) |
|---|---|---|---|---|---|---|
| Ex. | 55 | Acid | H₂O | 50 | | < 4% - 0.306 |
| | | | | | | |
| 5 | 55 | Acid | H₂O + activated carbon | 49 | 0.5% - 10 µm | 94 % - 0.018 |
| 6 | 105 | Acid | H₂O + activated carbon | 47 | 0.5% - 10 µm | 96% - 0.010 |

**Table VII**

| Isomers | | TEF | IN | OUT |
|---|---|---|---|---|
| 2,3,7,8 TCDD | ng/Nmc | 1 | 0.019 | 0.002 |
| 1,2,3,7,8 PeCDD | ng/Nmc | 0.5 | 0.060 | 0.002 |
| 1,2,3,4,7,8 HxCDD | ng/Nmc | 0.1 | 0.039 | 0.004 |
| 1,2,3,6,7,8 HxCDD | ng/Nmc | 0.1 | 0.082 | 0.005 |
| 1,2,3,7,8,9 HxCDD | ng/Nmc | 0.1 | 0.051 | 0.004 |
| 1,2,3,4,6,7,8 HpCDD | ng/Nmc | 0.01 | 0.498 | 1.011 |
| OCDD | ng/Nmc | 0.001 | 1.639 | 0.016 |
| 2,3,7,8 TCDF | ng/Nmc | 0.1 | 0.660 | 0.002 |
| 1,2,3,7,8 PeCDF | ng/Nmc | 0.05 | 0.207 | 0.003 |
| 2,3,4,7,8 PeCDF | ng/Nmc | 0.5 | 0.242 | 0.007 |
| 1,2,3,4,7,8 HxCDF | ng/Nmc | 0.1 | 0.859 | 0.005 |
| 1,2,3,6,7,8 HxCDF | ng/Nmc | 0.1 | 0.347 | 0.006 |
| 2,3,4,6,7,8 HxCDF | ng/Nmc | 0.1 | 0.463 | 0.006 |
| 1,2,3,7,8,9 HxCDF | ng/Nmc | 0.1 | 0.030 | 0.003 |
| 1,2,3,4,6,7,8 HpCDF | ng/Nmc | 0.01 | 1.961 | 0.020 |
| 1,2,3,4,7,8,9 HpCDF | ng/Nmc | 0.01 | 0.481 | 0.004 |
| OCDF | ng/Nmc | 0.001 | 4.445 | 0.004 |
| | | | | |
| PCDD/F | ngTE/Nmc | | 0.469 | 0.012 |

## Claims

1. A process for the removal of organic micropollutants from contaminated fumes **characterized in that** it uses a slurry bubble column and essentially comprises the following steps:
- feeding of the contaminated fumes, optionally already having undergone air purge treatment in said column;
- washing of the contaminated fumes in said column by means of a homogeneous adsorbing suspension of a hydrophobic and lipophylic solid in aqueous solution in a quantity ranging from 0.01 to 10% by weight;
- discharging of the purified fumes from said column;
- flushing of an aliquot of the exhausted adsorbing suspension containing the organic micropollutants so as to maintain the removal of said micropollutants at over 90% in equivalent toxicity or to maintain the concentration of PCDD/F at the outlet at least below 0.1 ngTEQ/Nmc;
- reintegration of the homogeneous adsorbing suspension in said column.

2. The process according to claim 1, wherein the hydrophobic and lipophylic solid in the homogeneous aqueous suspension is in a quantity ranging from 0.1 to 5% by weight.

3. The process according to claim 2, wherein the hydrophobic and lipophylic solid in the homogeneous aqueous suspension is in a quantity ranging from 0.5 to 2.5% by weight.

4. The process according to claim 1, wherein the hydrophobic and lipophylic solid in the homogeneous aqueous suspension has a particle size ranging from 5 to 500 µm.

5. The process according to claim 4, wherein the hydrophobic and lipophylic solid in the homogeneous aqueous suspension has a particle size ranging from 10 to 250 µm.

6. The process according to claim 1, wherein the hydrophobic and lipophylic solid is selected from activated carbons, fly ashes, silicates, zeolitic or zeolite-similar materials with a high silicon content, synthetic or natural polymeric molecules, selected from plastic materials, resins, rubbers and/or silicons.

7. The process according to claim 6, wherein the plastic materials are selected from polypropylene, PVC and polyethylene.

8. The process according to claim 1, wherein the temperature of the homogeneous aqueous suspension in the bubble column ranges from 30 to 70°C.

9. The process according to claim 1, wherein the aliquot of the suspension containing organic micropollutants is sent to a filtration step for the separation of the hydrophobic and lipophylic solid, in which the organic micropollutants have been adsorbed.

10. The process according to claim 9, wherein the aliquot of the suspension, after being filtered and separated from the hydrophobic and lipophylic solid, is recycled to the bubble column after reintegration of fresh hydrophobic and lipophylic solid and optionally aqueous solution.

11. The process according to claim 1, wherein dioxins are present among the organic micropollutants.
